(19) Europäisches Patentamt
European Patent Office
Office européen des brevets

(11) EP 0 844 468 A1

(12) EUROPÄISCHE PATENTANMELDUNG

(43) Veröffentlichungstag:
27.05.1998 Patentblatt 1998/22

(51) Int. Cl.⁶: **G01K 17/06**

(21) Anmeldenummer: 97119874.2

(22) Anmeldetag: 13.11.1997

(84) Benannte Vertragsstaaten:
AT BE CH DE DK ES FI FR GB GR IE IT LI LU MC NL PT SE

(30) Priorität: 23.11.1996 DE 29620440 U
14.02.1997 DE 29702547 U

(71) Anmelder: GRÄSSLIN KG
D-78112 St. Georgen (DE)

(72) Erfinder:
• Guderle, Rolf
78112 St. Georgen (DE)
• Weichhold, Martin
78048 VS-Villingen (DE)

(74) Vertreter:
Thoma, Friedrich, Dipl.-Ing.(FH)
Buchenstrasse 20
77716 Haslach (DE)

(54) **Vorrichtung zur Erfassung des Heizenergieverbrauchs und zur Ermittlung und Verteilung der Heizkosten eines Hauses und/oder Raumes**

(57) Bei einer Vorrichtung zur Erfassung des Heizenergieverbrauchs und zur Ermittlung und Verteilung der Heizkosten eines Hauses, mit einem elektrisch oder elektronisch gesteuerten Raumtemperaturregler (1) oder mit einem Heizkörperthermostatventilregler oder mit einem Kleinstellantrieb (31) für ein Durchgangs- oder Dreiwegeventil (19) an einem Heizkörper (18), ist der Raumtemperaturregler (1) oder der Heizkörperthermostatventilregler mit einer elektronischen Vorrichtung (4) zur Messung der Einschaltzeiten einer Heizung und/oder zur Messung der Größe einer stetigen Steuer- und Betriebsspannung ($U_{SB}$) versehen, wobei die Größe der Einschaltzeiten einer Heizung und/oder die Größe der stetigen Steuer- und Betriebsspannung ($U_{SB}$) ein Maß für den Heizenergieverbrauch ist und zur Ermittlung und Verteilung der Heizkosten verwertet wird.

Fig.1

EP 0 844 468 A1

## Beschreibung

Die Erfindung betrifft eine Vorrichtung zur Erfassung der Heizenergiekosten und zur Ermittlung und Verteilung der Heizkosten eines Hauses und/oder Raumes mit den Merkmalen nach dem Oberbegriff des Patentanspruchs 1.

In einer Vielzahl von Häusern bzw. Wohn-, Geschäfts- oder sonstigen Räumen sind Warmwasserheizeinrichtungen, insbesondere Heizkörper, vorgesehen, bei denen das Heizungswasser unmittelbar oder über sogenannte Durchgangs-oder Dreiwegeventile eingespeist wird, die dort unmittelbar oder mittelbar an derartigen Konvektoren installiert sind. Diese Durchgangs- oder Dreiwegeventile sind in der Regel mit einem elektromotorischen Kleinstellantrieb ausgestattet, der elektrisch oder elektronisch, insbesondere über eine Brückenschaltung, zweckmäßigerweise von einem Raumtemperaturregler mit einem entsprechend integrierten Meßwiderstand raumtemperaturabhängig gesteuert wird. Dabei ist es erforderlich, daß zur Erfassung des Heizenergieverbrauchs und zur Ermittlung und Verteilung der Heizkosten eines Hauses und/oder Raumes der Heizenergieverbrauch der einzelnen Räume zur gerechten Kostenverteilung nicht nur hinreichend präzise ermittelt wird, sondern auch, daß die dazu geeignete Vorrichtung technisch einfach, wirtschaftlich und leicht bedienbar ist. Außerdem soll sichergestellt sein, daß die Vorrichtung zweckmäßig einsetzbar und den jeweiligen räumlichen und heiztechnischen Verhältnissen optimal anpaßbar ist.

Die bekanntgewordenen Vorrichtungen zur Erfassung des Heizenergieverbrauchs und zur Ermittlung und Verteilung der Heizkosten insbesondere von Wohnräumen bestehen überwiegend aus sogenannten Wärmekostenverteilern nach dem Verdunstungsprinzip, die aus einem, mit einer Spezialflüssigkeit gefüllten, Meßröhrchen bestehen, das in einem Gehäuse zwischen den Rippen der Radiatoren befestigt wird. Die, im Laufe einer Heizperiode im Röhrchen verdunstete, Flüssigkeit ist ein Maß für die von den Heizkörpern abgegebene Wärme. Diese Geräte sind keine eigentlichen Wärmezähler, sondern im weitesten Sinne Heizkostenverteiler zur relativen Aufteilung der Betriebskosten von Zentralheizungen. Dabei sind zur Berücksichtigung der Heizkörperfläche verschiedene Meßzahlen erforderlich.

Diese bekannte Heizkostenverteilung ist nicht nur relativ ungenau, sondern der ablese- und umlegungstechnische, insbesondere manuelle Aufwand ist erheblich und unwirtschaftlich. Außerdem ist dort eine Korrektur bei verschiedenartigen Heizkörpern in einer zu messenden Anlage äußerst schwierig.

Der Erfindung liegt die Aufgabe zugrunde, eine Vorrichtung zur Erfassung des Heizenergieverbrauchs und zur Ermittlung und Verteilung der Heizkosten der eingangs genannten Art zu schaffen, die die Nachteile der bekannten Vorrichtung im wesentlichen beseitigt und die nicht nur hinsichtlich der Meßgenauigkeit verbessert, sondern deren Ergebnis rationeller und wirtschaftlicher ermittelt, verwaltet und umgelegt werden kann.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft bei der neuen Vorrichtung insbesondere zur relativen Erfassung des Heizenergieverbrauchs und zur mittelbaren Ermittlung und Verteilung der Heizkosten von Häusern und/oder Räumen ist nicht nur, daß diese in einer funktionstechnischen Verbindung mit einem elektronischen Raumtemperaturregler erfolgt, der zu diesem Zweck in jedem zu erfassenden Raum bzw. Haus installiert ist, oder daß bei einzelnen Radiatoren bzw. Heizkörpern die mit, von einem Kleinstellantrieb gesteuerten, Durchgangs-oder Dreiwegeventilen versehen sind, die Einschaltzeiten der jeweiligen Heizung oder des Kleinstellantriebs bzw. die dort jeweils anliegende Steuer- und Betriebsspannung $U_{SB}$ als ein direkt proportional es Maß für den Heizenergieverbrauch über einen zu erfassenden Abrechnungszeitraum gemessen werden, wobei diese Vorrichtung zweckmäßigerweise mit einer Einrichtung, insbesondere einem elektronischen Programmspeicher, zweckmässigerweise einem EEPROM, ausgestattet ist, in den die spezifischen Faktoren der jeweils zu berücksichtigenden Bausubstanzen eines Hauses und/oder Raumes und der jeweiligen raumspezifischen Wärmequelle bzw. des Dadiators, insbesondere in Form einer Kenngrösse K eingegeben und abgespeichert sind.

Vorteilhaft ist ferner die technisch relativ einfache und wirtschaftliche Ausführung der neuen Vorrichtung, sowohl als Einzelgerät, als auch in unmittelbarer bautechnischer Verbindung mit einem elektronischen Raumtemperaturregler.

Von Vorteil ist desweiteren die, mit der neuen Vorrichtung vorgesehenen, zentrale Heizkostenerfassung mehrerer Räume bzw. Häuser, deren Einzeldaten über einen vorgesehenen elektrischen Installationsbus einer zentralen Heizkostenerfassungs- und -verteilungsstelle mit einer elektronischen Datenverarbeitungseinrichtung zuführbar ist, die die Einzelabrechnung bzw. den jeweiligen Geldwert ermittelt und dem einzelnen Verbraucher zustellt.

Ausführungs- und Anwendungsbeispiele der neuen Vorrichtung sind in den Zeichnungen dargestellt und werden im folgenden näher erläutert. Es zeigen

Fig. 1    eine Vorderansicht auf einen Raumtemperaturregler mit integrierter Heizkostenermittlungsvorrichtung,

Fig. 2    ein Blockschaltbild auf eine Einzelraumtemperaturregelung mit einer Heizkostenermittlungsvorrichtung und mit einer Schnittstelle zu einem Datenbus für die Heizkostenzentralerfassung,

Fig. 3        eine schaubildliche Ansicht der Einrichtungen nach Fig. 2,

Fig. 4        den Temperaturverlauf in einem Raum,

Fig. 5        ein Diagramm der Kenngröße K eines Raumes in Abhängigkeit von der Einschaltdauer der Heizung,

Fig. 6        eine schaubildliche Teilansicht eines zentral beheizten und geregelten Raumes mit einer neuen Vorrichtung zur Erfassung des Heizenergieverbrauchs und

Fig. 7        ein Diagramm des Zeit-Steuer-Betriebsspannungs-Meßwertes in Abhängigkeit von der Raumtemperatur und der Kenngröße K.

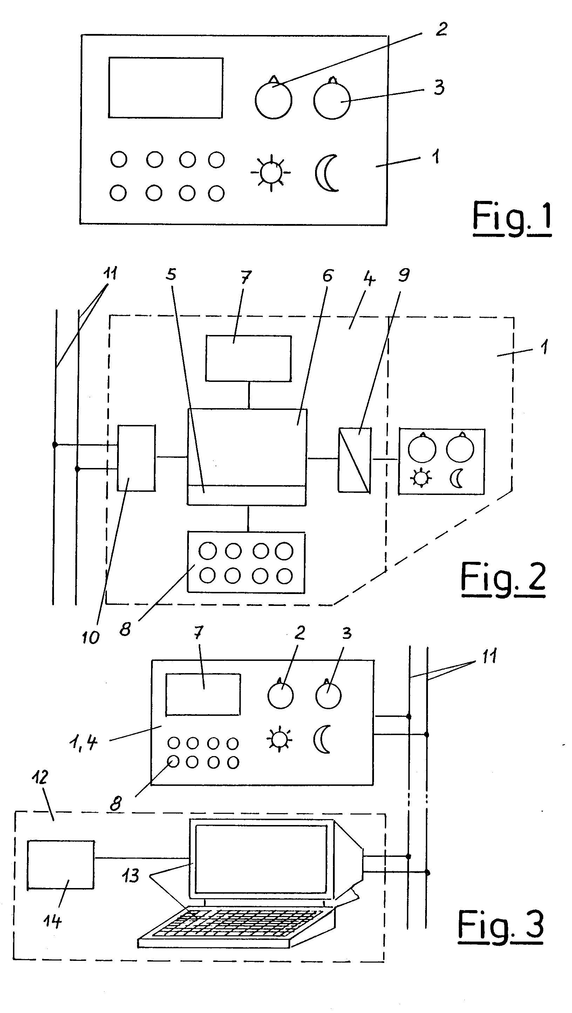

Der, in der Fig. 1 dargestellte, Raumtemperaturregler besteht im wesentlichen aus einer an sich bekannten, insbesondere elektronischen zeitgesteuerten Raumtemperaturregeleinrichtung, bei der an den beiden Drehknöpfen 2 und 3 die Tages- und/oder die Nachttemperatur individuell eingestellt werden kann. Diese Temperaturregeleinrichtung wirkt dabei entweder auf die im Raum vorgesehenen elektrisch betätigbaren Heizkörperventile der heizwassergespeisten Raumheizkörper oder auf eine elektrische Schalteinrichtung elektrisch beheizter Raumheizkörper oder dergl. Heizquellen bzw. Radiatoren.

Es liegt im Rahmen der Erfindung, daß der Raumtemperaturregler 1 in bekannter Weise auch unmittelbar auf ein Mischventil oder eine primäre bzw. zentrale Heizanlage wirken kann.

Wie aus der Fig. 2 näher ersichtlich wird, ist zweckmäßigerweise im Gehäuse des Raumtemperaturreglers 1 eine insbesondere elektronische Vorrichtung 4 mit einem gepufferten oder nichtflüchtigen Speicher 5, insbesondere einem EEPROM, einem Rechenwerk 6, einem optoelektronischen Display 7, einer Tastatur 8 und einem Digital-Analogwandler 9 vorgesehen.

Mittels dieser Vorrichtung 4 werden insbesondere die Einschaltzeiten der Heizung erfaßt, abgespeichert und zweckmäßigerweise auf einen bestimmten Erfassungszeitraum umgelegt und zur Abrechnung ausgegeben. Außerdem werden in den Speicher die zur Heizkostenerfassung bzw. -umlegung erforderlichen Kennwerte bzw. Kenngrößen K, aus den jeweiligen Bausubstanzen und den zu berücksichtigten Wärmequellen bzw. Radiatoren eingegeben.

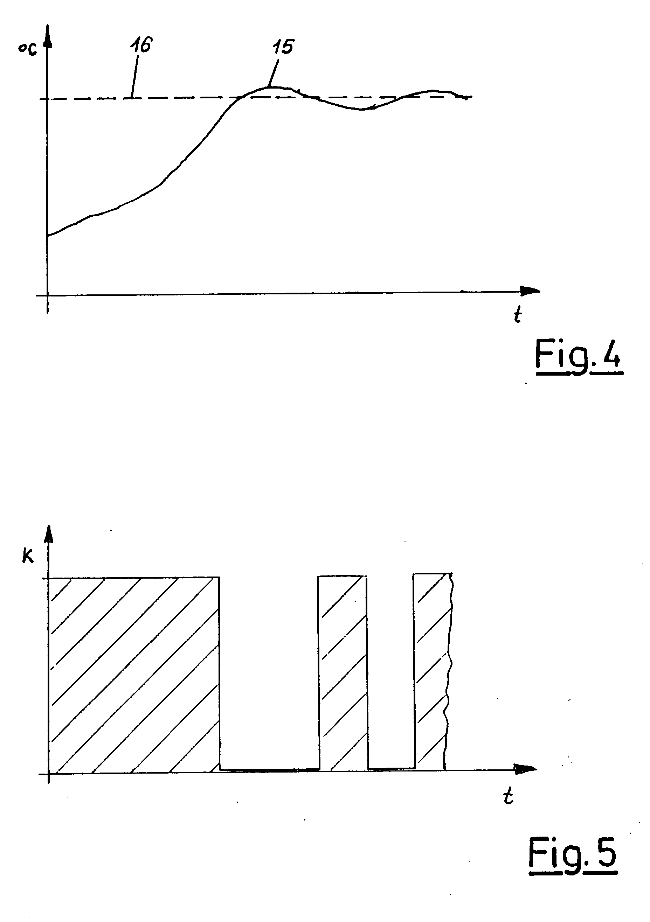

Die Meßwertausgabe an der Vorrichtung 4 kann sowohl in einer bestimmten, dem jeweiligen Heizenergieverbrauch entsprechenden, Meßzahl oder in kcal, Kwh oder einem entsprechenden Geldwert erfolgen. Die Meßwertausgabe bzw. -anzeige kann dabei einzelraumspezifisch unmittelbar am Display 7 erfolgen und/oder über eine Schnittstelle 10 einer zentralen Heizkostenermittlungsstelle, beispielsweise der Hausverwaltung, oder dergl., zur Bearbeitung und/oder Anzeige bzw. Abrechnung übertragen werden, wie dies aus der Fig. 4 schematisch ersichtlich wird.

In der Fig. 3 bezeichnet 1 den Raumtemperaturregler mit den Temperatureinstell-Drehknöpfen 2 und 3. 7 bezeichnet das Anzeige-Display und 8 die Eingabetastatur. Die Tastatur 8 dient insbesondere zur Eingabe einer, im folgenden noch näher beschriebenen und raumspezifisch zu berücksichtigenden Kenngröße K. 11 kennzeichnet einen Datenbus, insbesondere einen Installations-Datenbus (EIB), über den u.a. die von der neuen Vorrichtung 4 erfaßten Einschaltzeiten der Heizung an eine zentrale Heizkostenermittlungsstelle 12 mit einem Computer 13 und einem Drucker 14 übertragen werden.

Zur präzisen Ermittlung und Umlegung der Heizkosten ist es erforderlich, daß neben der Einschaltzeitdauer der Heizung, die direkt proportional zum jeweiligen Wärmebedarf beispielsweise eines Raumes oder eines ganzen Hauses ist, insbesondere die jeweiligen Kennwerte bzw. die Kenngröße K aus der Bausubstanz und Größe eines Raumes bzw. Hauses in der Heizkostenermittlung hinreichend berücksichtigt wird.

Zu diesem Zweck ist es vorgesehen, daß bei der Ermittlung der Heizkosten eines Hauses nicht nur in jedem Raum ein Raumtemperaturregler 1 mit einer neuen Vorrichtung 4 installiert ist, sondern auch, daß in die Heizkostenermittlung außerdem eine, insbesondere der jeweiligen Bausubstanz und dem Volumen eines Raumes entsprechende, Kenngröße K zu berücksichtigen ist, die in Form eines bestimmten Zahlenwertes in den elektronischen Speicher 5 der Vorrichtung 4 eingegeben wird. Insbesondere entspricht die Kenngröße K dort dem Wert des jeweiligen Raumvolumens oder bei einheitlicher Raumhöhe dem Wert der jeweiligen Raumfläche. Diese Vereinfachung leitet sich aus der folgenden Formel ab:

$$Q = C_V \cdot m \cdot \Delta \vartheta$$

Q entspricht dabei dem Wärmebedarf (Verbrauch) eines Raumes. $C_V$ entspricht der spezifischen Wärmekapazität der Luft bei konstantem Raumvolumen V, m bedeutet die Masse der Luft entsprechend

$$m = \frac{V(Volumen)}{\rho(Luftdichte)}$$

und $\Delta \vartheta$ die Temperaturdifferenz zwischen Soll- und Ist-Temperatur.

Diese Formel kann umgestellt werden wie folgt:

$$Q = C_V \cdot \frac{V}{\rho} \cdot \Delta \vartheta = \frac{CV}{\rho} \cdot V \cdot \Delta \vartheta$$

Der erste Faktor

$$\left(\frac{C \, V}{\rho}\right)$$

kann als in allen Räumen gleich angenommen werden. Der zweite Faktor ( V ) ist als Kenngröße K einzuprogrammieren. Der dritte Faktor ($\Delta\vartheta$) wird ersetzt durch die Einschaltdauer $\Delta t$ des Thermostaten, wobei davon ausgegangen wird, daß grundsätzlich bei negativem $\Delta\vartheta$ (Ist-Temperatur kleiner als Soll-Temoeratur) der Thermostat einschaltet. Es ergibt sich die Formel für Räume mit gleichem Faktor

$$\left(\frac{C \, V}{\rho}\right):$$

$Q = V \cdot \Delta t$ ; oder für Räume mit einheitlicher Raumhöhe: $Q = F \cdot \Delta t$

Die Fig. 4 zeigt den typischen Temperaturverlauf in einem Raum. Dabei bedeutet die Linie 15 den Ist-Temperaturwert und die punktierte Linie 16 den Soll-Temperaturwert eines Raumes.

Das Diagramm nach Fig. 5 zeigt die Kenngröße K bzw. das Volumen V oder die Fläche F in Abhängigkeit von der jeweiligen Einschaltdauer $\Delta t$ der Heizung. Nach diesem Diagramm bestimmt das Integral der Einschaltdauer über die Kenngröße des Raumes den Wärmebedarf eines Raumes.

Es liegt im Rahmen der Erfindung, daß zur Erfassung des Heizenergieverbrauchs und zur Ermittlung bzw. Umlegung der Heizkosten, insbesondere bei heizwassergespeisten Heizkörpern oder dergl. Radiatoren, die mit Heizkörperthermostatventilen oder Umwälzpumpen oder Mischern bzw. Reglerklappen oder unmittelbar durch die Brenndauer eines Brenners geregelt sind, insbesondere die Einschaltdauer dieser Heizkörperthermostatventile oder Umwälzpumpen oder Mischern bzw. Reglerklappen oder Brenner, anstelle ausschließlich eines Raumtemperaturreglers 1 bzw. eines entsprechenden Raumthermostaten gemessen und als Meßwert in die neue Vorrichtung 4 eingegeben wird.

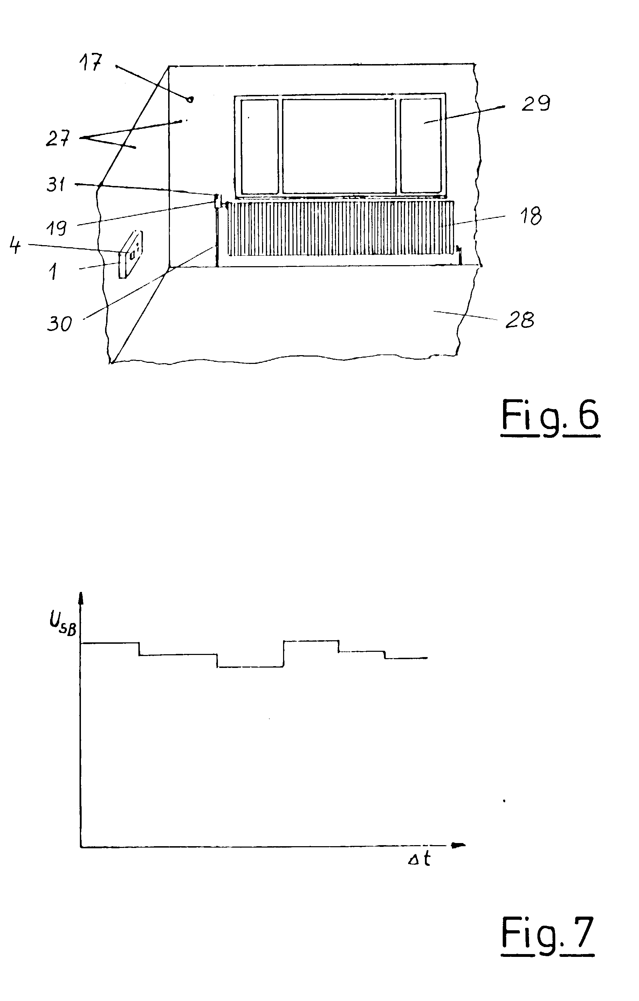

So zeigt die Fig. 6 eine Vorrichtung zur Erfassung des Heizenergieverbrauchs und zur Ermittlung und Verteilung der Heizkosten eines Raumes 17 mit den Wänden 27, dem Boden 28 und einem Fenster 29. 18 bezeichnet dort einen mit Heizwasser gespeisten Heizkörper, der mittels eines, von einem elektromotorischen Kleinstellantrieb 31 einstellbaren, Durchgangs- oder Dreiwegeventil 19 geregelt wird, das in der Heizwasservorlaufleitung 30 unmittelbar am Heizkörper 18 angeordnet ist.

Die Steuerung des Kleinstellantriebs 31 erfolgt raumtemperaturabhängig. Zu diesem Zweck ist im einstellbaren Raumtemperaturregler 1 ein Temperatursensor, z.B. ein Meßwiderstand, vorgesehen, welcher die gemessene Raumtemperatur (Istwert) an einen Analog- oder uP-Regler meldet. Dieser Regler vergleicht den gemessenen Raumtemperatur-Istwert mit dem Sollwert und stellt über ein stetiges Ausgangs-Spannungssignal den Kleinstellantrieb 31 und damit das Durchgangs- oder Dreiwegeventil 19 raumtemperaturabhängig nach.

Im Raumtemperaturregler 1 nach Fig. 6 ist eine elektronische Vorrichtung 4 vorgesehen, mit der die Dauer und Größe der jeweiligen, am Motorstromkreis des Kleinstellantriebs 31 anliegenden, stetigen Steuer- und Betriebsspannung $U_{SB}$, von der die Stellung des Durchgangs- oder Dreiwegeventils 19 abhängt, gemessen wird, die ein relativ genaues Maß für den zu erfassenden Heizenergieverbrauch darstellt.

Zur präzisen Messung der Zeitdauer und Größe der jeweiligen Steuer- und Betriebsspannung $U_{SB}$ ist die elektronische Vorrichtung 4 im Raumtemperaturregler 1 mit einer elektronisch gesteuerten Zeit- und Schwellwertspannungsmeßeinrichtung versehen. Dabei ist daran gedacht, die pro Zeiteinheit t ermittelte Steuer- und Betriebsspannung $U_{SB}$ mit einem A/D-Wandler 9 und/oder einem Rechenwerk 6 in ein digitales Meßwertsignal umzuwandeln, und dieses Signal in einem vorgesehenen elektronischen Speicher 13 zur weiteren Verarbeitung abzuspeichern, wie dies aus den Fig. 2 und Fig. 3 ersichtlich und zu diesen beiden Figuren erläutert wurde.

Das, in der Fig. 7 dargestellte, Diagramm zeigt die Abhängigkeit der von der Vorrichtung 4 im Raumtemperaturregler 1 nach Fig. 6 ermittelten Dauer und Größe der jeweiligen, am Kleinstellantrieb 31 anliegenden, Steuer- und Betriebsspannung $U_{SB}$ von der Raumtemperatur bei konstanter Kenngröße K.

Es liegt im Rahmen der Erfindung, daß anstelle eines Kleinstellantriebs 31 auch ein, unter einer stetig anliegenden Steuer- und Betriebsspannung $U_{SB}$ stehender, elektromechanischer Antrieb zur Betätigung eines Heizkörperventils 18 treten kann, bei dem die Zeitdauer und Größe der Steuer- und Betriebsspannung $U_{SB}$, zusammen mit einer entsprechenden Kenngröße K, ein direktproportionales Maß für den Heizenergieverbrauch bzw. den Wärmebedarf eines Hauses und/oder Raumes ist.

**Patentansprüche**

1. Vorrichtung zur Erfassung des Heizenergieverbrauchs und zur Ermittlung und Verteilung der Heizkosten eines Hauses, mit einem elektrisch oder elektronisch gesteuerten Raumtemperaturregler (1) oder mit einem Heizkörperthermostatventilregler oder mit einem Kleinstellantrieb (31) für ein Durchgangs- oder Dreiwegeventil (19) an einem Heizkörper (18), **dadurch gekennzeichnet,** daß der Raumtemperaturregler (1) oder der Heizkörperthermostatventilregler mit einer elektronischen Vorrichtung (4) zur Messung der Einschaltzeiten einer Heizung und/oder zur Messung der Größe einer stetigen Steuer- und Betriebsspannung ($U_{SB}$) versehen ist, und daß die Größe der Einschaltzeiten einer Heizung und/oder die Größe der stetigen Steuer- und Betriebsspannung ($U_{SB}$) ein Maß für den Heizenergieverbrauch ist und zur Ermittlung und Verteilung der Heizkosten verwertet wird.

2. Vorrichtung nach Anspruch 1, dadurch gekennzeichnet, daß zur Eingabe und Abspeicherung der Einschaltzeiten der Heizung und/oder einer heizquellen- und/oder bausubstanzspezifischen Kenngröße (K) für einen, den Heizungsverbrauch bzw. die Heizkosten zu ermittelnden, Raum in der Vorrichtung (4) ein elektronischer Speicher (5), insbesondere mit einem elektronischen Rechenwerk (6), sowie einer Tastatur (8) und einen optoelektronischen Anzeige-Display (7) vorgesehen sind.

3. Vorrichtung nach Anspruch 1 und 2, dadurch gekennzeichnet, daß die Kenngröße (K), entsprechend einer Wärmemenge (Q), insbesondere aus der spezifischen Wärmekapazität der Luft ($C_V$), der Masse (m) der Luft und der Temperaturdifferenz ($\Delta\vartheta$) zwischen der Soll- (16) und der Ist-Temperatur (15) zusammengesetzt ist.

4. Vorrichtung nach Anspruch 1 bis 3, dadurch gekennzeichnet, daß die, von der Vorrichtung (4) ermittelten, Meßwerte und/oder Daten über einen Datenbus (11) an eine zentrale Heizkostenermittlungsstelle (12) übertragen werden.

5. Vorrichtung nach Anspruch 1 bis 4, dadurch gekennzeichnet, daß die Vorrichtung (4) mit einer insbesondere elektronischen Schnittstelle (10) zum Anschluß der Vorrichtung (4) an einen Installations-Datenbus (EIB) versehen ist.

Fig. 1

Fig. 2

Fig. 3

Fig.4

Fig.5

Fig. 6

Fig. 7

8

| Europäisches Patentamt | **EUROPÄISCHER RECHERCHENBERICHT** | Nummer der Anmeldung |
|---|---|---|
| | | EP 97 11 9874 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,P | DE 296 20 440 U (GRASSLIN) 20.Februar 1997 <br> * das ganze Dokument * <br> --- | 1-5 | G01K17/06 |
| X,P | DE 297 02 547 U (GRASSLIN) 30.April 1997 <br> * das ganze Dokument * <br> --- | 1-5 | |
| X | DE 36 03 294 A (ZIMMERMANN ARTUR;HILD HANS RUDOLF; SIGMUND RAINER; STEHLING NORBERT) <br> * Spalte 4, Zeile 41 - Spalte 6, Zeile 3 * <br> --- | 1,2 | |
| X | AT 307 668 B (BOTLIK) <br> * Seite 3, Zeile 13 - Zeile 20 * <br> --- | 1 | |
| X | EP 0 181 013 A (SETTELS BV) <br> * Seite 4, Zeile 23 - Zeile 34 * <br> --- | 1,2 | |
| A | US 4 675 828 A (WINSTON ARTHUR W) <br> * Zusammenfassung * <br> --- | 4,5 | |
| A | DE 29 23 429 A (LEICHT MARTIN) <br> * Seite 4, Absatz 3; Abbildungen * <br> ----- | 1 | |

**RECHERCHIERTE SACHGEBIETE (Int.Cl.6)**

G01K

Der vorliegende Recherchenbericht wurde für alle Patentansprüche erstellt

| Recherchenort | Abschlußdatum der Recherche | Prüfer |
|---|---|---|
| DEN HAAG | 10.Februar 1998 | Ramboer, P |

EPO FORM 1503 03.82 (P04C03)